# EUROPEAN PATENT APPLICATION

(11) **EP 4 764 768 A1**
(43) Date of publication of application: **24.06.2026**
(21) Application number: 24221145.6
(22) Date of filing: 18.12.2024
(51) Int. Cl.: G06F 1/12, G06F 1/14

(54) **METHOD, SYSTEM, AND COMPUTER PROGRAM FOR SYNCHRONIZED PERIPHERAL CONFIGURATION IN MULTI-CLOCK DOMAIN SYSTEMS**

(71) Applicant: EM Microelectronic-Marin SA, 2074 Marin (CH)
(72) Inventor: Sima, Ovidiu, 8055 Zurich (CH)
(74) Representative: ICB SA

(57) **Abstract**

The invention relates to a method, system, and computer program for modifying the configuration of a peripheral in a multi-clock domain system. The system comprises a configuration/access interface operating on a first clock source signal and a data logic module with a data register operating on a second clock source signal. A configuration change detector identifies configuration updates, and a configuration manager synchronizes operations by dynamically disabling and enabling the second clock source based on the state of its signal. A data input controller updates the data register, with provisions for counter-based operations when applicable. The method ensures precise synchronization, minimizes latency, and maintains data integrity by automating operations within a single clock cycle of the first clock source signal. The invention is particularly suitable for real-time and embedded applications, where efficient resource utilization and reliable performance are critical.

## Description

### Field of the invention

The invention concerns digital systems, specifically methods for reading data from peripherals in environments where components operate on different clock sources. It focuses on systems involving a Configuration/Access Interface and a Data Logic unit.

### Background of the invention

In conventional digital systems, components often cooperate on distinct clock sources, each generating independent clock signals. For example, a configuration and access interface might operate with a clock signal different from the clock signal used by a data logic module. This separation of clock domains introduces significant synchronization challenges when these components need to interact. Writing data to a data register within the data logic module, while maintaining proper synchronization between the clock domains, exemplifies one such challenge.

Existing solutions to this problem generally rely on two approaches: halting the clock signal of one domain during critical operations or employing synchronization logic to coordinate the timing of interactions between the domains. Halting the clock signal prevents conflicts but introduces latency, slowing overall system performance. In real-time applications where speed and responsiveness are essential, such delays can critically impact functionality. Synchronization logic, on the other hand, attempts to maintain continuous operation while managing the timing differences. However, this approach introduces additional complexity and computational overhead, further contributing to latency. Even minimal delays caused by synchronization mechanisms can lead to unpredictable errors in the data, compromising the integrity of time-sensitive systems.

These limitations are particularly problematic in real-time and embedded systems, where transitions between states must occur quickly and reliably. High latency or synchronization errors can disrupt operations, especially in applications requiring precise timing and efficient resource usage. To compensate for the inefficiencies in existing methods, systems often increase the clock frequency, which enhances precision but results in higher power consumption. This trade-off is a critical drawback, particularly in low-power applications, such as portable devices and Internet of Things (IoT) systems, where energy efficiency is paramount.

The reliance on synchronization logic also increases the complexity of system architecture. This added complexity makes the system more challenging to design, implement, and maintain, while also raising costs. As systems grow larger and incorporate multiple clock domains, the scalability of such approaches becomes another significant limitation. The cumulative effect of these drawbacks restricts the performance, reliability, and efficiency of conventional methods for managing synchronization in multi-clock systems.

### Summary of the invention

According to a first aspect of the invention, it is disclosed a method for changing a configuration of a peripheral in a system comprising a configuration/access interface operating on a first clock source configured to provide a first clock source signal and a data logic module with a data register module operating on a second clock source configured to provide a second clock source signal, the method comprising:
(a) detecting a configuration change;
(b) if an active sampling edge of the second clock source signal is detected, waiting for a data register update and then disabling the second clock source, if not immediately disabling the second clock source;
(c) writing a new value to the data register, and
(d) if an active sampling edge of the second clock source signal is detected, waiting for an edge done, updating the data register and then enabling the second clock source, immediately disabling the second clock source; if not, immediately enabling the second clock source.

The method minimizes latency by automating the disabling and enabling of the second clock source based on specific signal conditions. This reduces the risk of errors during configuration changes and ensures data integrity in the data register. The verification of sampling edge states before re-enabling prevents synchronization issues and optimizes processing efficiency by avoiding unnecessary toggling or delays in the system.

The configuration change may be detected by a configuration change detector module associated with the configuration/access interface, wherein the configuration change detector module monitors signals from the configuration/access interface to identify the configuration change. Using a configuration change detector module associated with the configuration/access interface ensures that configuration changes are identified accurately and in real-time.

The second clock source may be disabled by suspending the toggling of the second clock source signal for the data logic module and the data register. Disabling the second clock source by suspending the toggling of its clock signal ensures that the data logic module and data register remain in a stable state during configuration changes. This approach prevents corruption of data and reduces the likelihood of timing conflicts, which is particularly advantageous in systems requiring high precision or real-time performance.

The verification of the absence of an active sampling edge of the second clock source signal is performed by a configuration manager module. Performing the verification of the absence of an active sampling edge of the second clock source signal via a configuration manager module centralizes the synchronization process, reducing complexity in the overall system design.

The writing of the new value to the data register may be performed by a data input controller module configured to update the value based on the input from the configuration/access interface.

If an active sampling edge of the second clock source signal is detected, the enabling of the second clock source may be performed after a predefined delay. Enabling the second clock source after a predefined delay ensures the stability of the data written to the data register. This approach reduces the risk of errors caused by premature reactivation of the clock source and guarantees that operations dependent on the new configuration parameters can proceed without disruption.

The method may be performed automatically by the system within a single clock cycle of the first clock source signal (cs1_signal), to minimize latency. Performing the method automatically within a single clock cycle of the first clock source signal significantly minimizes latency. This ensures that configuration changes are implemented rapidly, improving the system's real-time performance and responsiveness. Additionally, it optimizes the use of processing resources by avoiding prolonged synchronization processes.

The data register may be incremented by a predefined value if the data logic module acts as a counter.

According to a second aspect of the invention, it is disclosed a system for changing a configuration of a peripheral, the system comprising:
(a) a configuration/access interface configured to operate on a first clock source signal provided by a first clock source;
(b) a data logic module comprising a data register and configured to operate on second clock source signal provided by a second clock source;
(c) a configuration change detector module configured to detect a configuration change initiated by the configuration/access interface;
(d) a configuration manager module configured to
   - if an active sampling edge of the second clock source signal is detected, waiting for a data register update and then disabling the second clock source, if not immediately disabling the second clock source, and
   - if an active sampling edge of the second clock source signal is detected, waiting for an edge done, updating the data register and then enabling the second clock source, immediately disabling the second clock source; if not, immediately enabling the second clock source, and
(e) a data input controller module configured to write a new value to the data register based on the detected configuration change.

According to a third aspect of the invention, it is disclosed a computer program comprising instructions which, when executed by a processor in a system, cause the system to perform a method for changing a configuration of a peripheral, the method comprising:
(a) detecting a configuration change;
(b) if an active sampling edge of the second clock source signal is detected, waiting for a data register update and then disabling the second clock source, if not immediately disabling the second clock source;
(c) writing a new value to a data register within a data logic module; and
(d) if an active sampling edge of the second clock source signal is detected, waiting for an edge done, updating the data register and then enabling the second clock source, immediately disabling the second clock source; if not, immediately enabling the second clock source.

### Brief description of the drawings

The present invention will be described subsequently in more detail with reference to the attached drawing, given by way of examples, but in no way limited thereto, in which
- Figure 1 is a flowchart depicting the operational stages of the data read process;
- Figure 2 is a schematic diagram illustrating a system architecture, and
- Figure 3 is an example timing diagram illustrating the relationships between signals.

### Detailed description of the invention

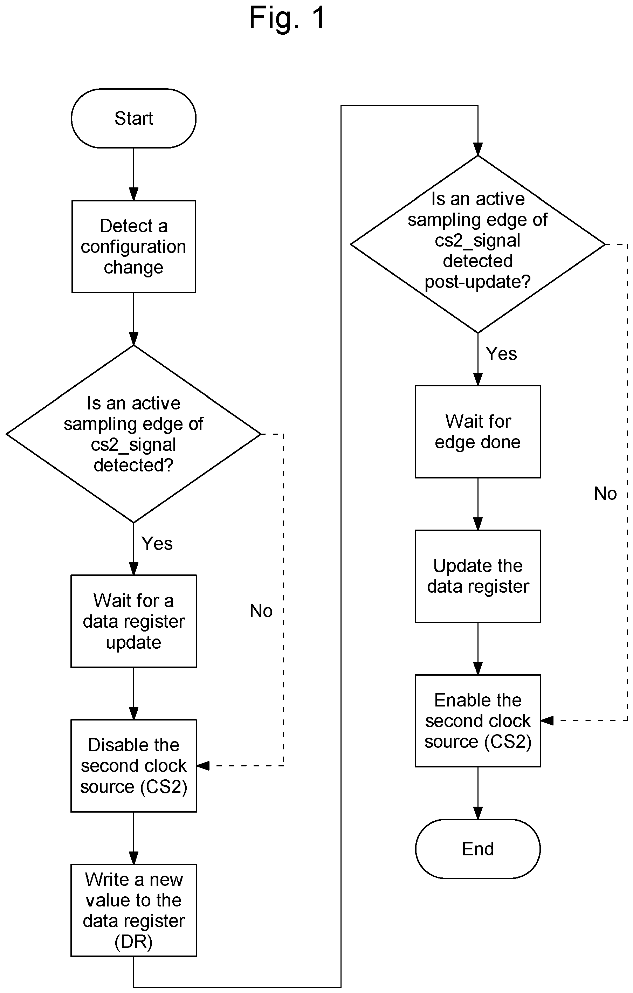

Figure 1 illustrates a detailed process for modifying the configuration of a peripheral in a system that includes a configuration/access interface, a data logic module, and two distinct clock sources. This process is presented as a flowchart, depicting the various steps and conditional decisions required to ensure synchronization and data integrity. The elements described in the figure align with the steps and components outlined in the invention disclosure and claims.

The process begins with an initial step where a configuration change is detected by the configuration/access interface. This step, represented by a rectangle labeled "Detect a configuration change," identifies any modifications in the device's configuration parameters. This detection is essential to initiate the subsequent steps in a controlled manner.

Once the configuration change is detected, a decision is made to check whether an active sampling edge of the second clock source signal cs2_signal is present. This check is depicted by a diamond labeled "Is an active sampling edge of cs2_signal detected?". If an active edge is detected, the system enters a waiting phase to allow the data register update to complete. In certain implementations, this waiting phase may last for a pre-defined period of time to ensure that any transient effects have settled. This waiting phase, shown as a rectangle labeled "Wait for a data register update," ensures that all ongoing operations associated with the active edge are finalized before proceeding further.

Once the data register is updated, the second clock source is disabled. This action is represented by the rectangle labeled "Disable the second clock source CS2." Disabling this clock source is critical to prevent data corruption or conflicts during the write phase. A new value is then written to the data register, as illustrated by the rectangle labeled "Write a new value to the data register DR." This step updates the data according to the detected configuration change.

After the new value is written, an additional verification step checks whether an active sampling edge of the cs2_signal is present post-update. This decision is represented by another diamond labeled "Is an active sampling edge of cs2_signal detected post-update?". If an active edge is detected, the system waits for the edge to complete before proceeding, as shown by the rectangle labeled "Wait for edge done." In certain implementations, this waiting phase may last for a pre-defined period of time to ensure that any transient effects have settled. This waiting ensures the stability and consistency of the signal before re-enabling the second clock source.

Once the absence of an active edge is confirmed, the data register is updated if necessary, as indicated in the step "Update the data register." The second clock source is then re-enabled, represented by the rectangle labeled "Enable the second clock source CS2." This re-enabling allows the system to resume normal operation with the updated parameters.

The process concludes when all steps have been successfully executed, ensuring that the configuration has been safely and efficiently modified. This flowchart highlights the importance of conditional steps and built-in delays to achieve precise synchronization between the system's components, minimize latency, and maintain data integrity throughout the process.

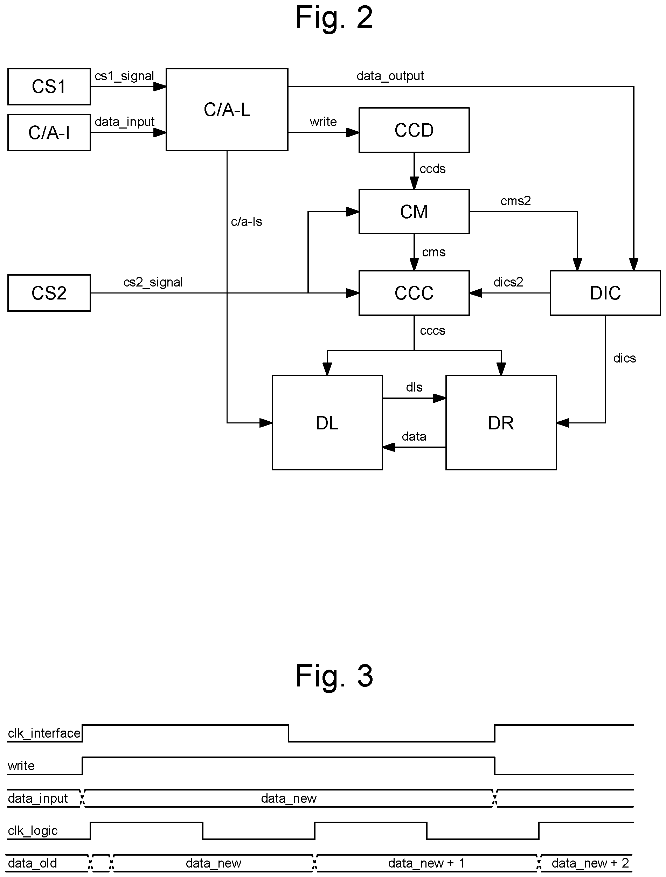

The described system enables modifying the configuration of a peripheral in a coordinated manner, involving multiple interconnected components to ensure efficiency, low latency, and data integrity across distinct clock domains. As illustrated in Figure 2, the system integrates a configuration/access interface, a data logic module, a data register, and two distinct clock sources, each providing unique signals to synchronize various operations.

The system includes a configuration/access interface C/A-I, which operates using a first clock source signal cs1_signal provided by a first clock source CS1. This interface serves as the primary mechanism for initiating configuration changes and facilitates communication between the peripheral and the system. Connected to this interface is a configuration/access logic module C/A-L, which processes input signals data_input from the C/A-I and generates a write signal write. The configuration/access logic module also produces additional outputs, such as a configuration/access logic signal c/a-Is and a data output signal data_output, which are used to inform and coordinate the operations of downstream components.

A second clock source CS2 provides a second clock source signal cs2_signal, which synchronizes the operations of a data logic module DL and a data register DR. The data logic module DL processes tasks based on the configuration, while the data register stores updated data needed for the system's operation. The separation of clock domains, as shown in Figure 2, allows these modules to operate independently, ensuring flexibility in handling tasks across multiple timing domains.

The system includes a configuration change detector module CCD, which detects configuration changes initiated by the configuration/access interface. The change detector module receives the write signal generated by the configuration/access logic module and produces a configuration change detector signal ccds, which is communicated to a configuration manager module CM.

The configuration manager module CM coordinates the disabling and enabling of the second clock source and ensures proper synchronization during configuration updates. Upon receiving the ccds signal from the change detector module, the configuration manager module determines whether an active sampling edge of the cs2_signal is present. If an active edge is detected, the configuration manager module waits for the data register to complete any ongoing updates before issuing a command to disable the second clock source CS2. If no active edge is detected, the configuration manager module disables the second clock source immediately. Similarly, after the data register has been updated with new configuration data, the configuration manager module checks the state of the cs2_signal. If an active edge is detected, the configuration manager module waits for the edge to complete, updates the data register as needed, and then enables the second clock source CS2. If no active edge is present, the second clock source CS2 is enabled immediately. These conditional operations ensure precise timing, prevent conflicts, and maintain synchronization between clock domains.

The configuration manager CM module interacts with a configuration clock controller module CCC to manage the toggling of the cs2_signal. The configuration manager module executes the configuration manager instructions, ensuring that the second clock source is disabled or re-enabled at the appropriate times.

The system also includes a data input controller module DIC, which writes the updated configuration value to the data register DR based on the detected configuration change. The data input controller module DIC receives data from the data output signal generated by the C/A-L and writes the new value to the DR. Additionally, when the DL functions as a counter, the data input controller module DIC increments the data register DR by a predefined value, supporting iterative or state-based operations.

All operations within the system are automated and completed within a single clock cycle of the cs1_signal, ensuring minimal latency and high efficiency. By eliminating the need for external synchronization logic, the system reduces complexity and enhances scalability, making it suitable for real-time and embedded applications. The design ensures precise coordination between the change detector module CCD, the configuration manager CM, the clock controller module CCC, and the data input controller module DIC.

Figure 2 provides a clear illustration of the interactions between these components. The C/A-L processes inputs from the C/A-I, generating critical signals such as write, c/a-ls, and data_output. These signals guide the change detector module CCD and configuration manager CM, which manage synchronization and control the CS2 via the clock controller module CCC. The data input controller module DIC updates the data register DR based on configuration data while the DL operates under the CS2 to execute logic tasks. The signal flows, including ccds, cms, cms2, cccs, and dies, ensure smooth communication between modules, addressing the challenges of managing multi-clock systems.

This system offers a robust and efficient solution for modifying the configuration of peripherals, ensuring minimal latency, maintaining data integrity, and providing scalability for real-time environments.

The invention includes a computer program comprising instructions which, when executed by a processor, enable the system to perform the described method for modifying the configuration of a peripheral. The program automates the detection of configuration changes by monitoring signals from the configuration/access interface C/A-I and triggering subsequent operations in response.

The program evaluates the status of the second clock source signal cs2_signal to determine whether an active sampling edge is present. If detected, it pauses operations until ongoing updates to the data register DR are complete, ensuring data integrity. It then disables the second clock source CS2 and updates the data register via the data input controller module DIC. For applications involving counters, the program increments the data register by a predefined value when necessary.

After updating the data register, the program verifies the stability of the second clock source signal and enables CS2 only when no active edge is present. All operations are designed to be completed within a single clock cycle of the first clock source signal cs1_signal, minimizing latency and ensuring synchronization across clock domains. This automated process eliminates the need for manual intervention or external synchronization logic, making the system efficient, scalable, and suitable for real-time applications.

Figure 3 illustrates the timing diagram of operations involved in updating the configuration of a peripheral in a multi-clock domain system. The diagram provides a detailed view of signal transitions and data flow during the process, showcasing the synchronization between the configuration/access interface clk_interface and the data logic module clk_logic, as well as the updates to the data register.

The clk_interface signal represents the clock signal governing the configuration/access interface, which initiates the configuration change. The rising edge of this clock signal triggers the write signal, indicating that a new configuration value is being prepared for the data register. During the active phase of the write signal, the data_input signal transitions from an undefined or previous state to the new value, labeled as data_new. This transition ensures that the updated configuration data is made available for subsequent operations.

The clk_logic signal represents the clock signal governing the data logic module and the data register. The synchronization between the clk_interface and clk_logic signals ensures proper coordination during the update process. The data register begins in a state represented by data_old. Following the synchronization of the write signal with the clk_logic signal, the data register updates to reflect the data_new value.

Once the data_new value is written, the system increments the data register, demonstrating its ability to handle counter-based operations. The increments are shown as data_new + 1 and data_new + 2, which occur on subsequent cycles of the clk_logic signal. This sequence highlights the system's capability to support iterative or state-dependent operations efficiently.

The timing diagram ensures that the transitions of the data register values are precisely aligned with the clk_logic signal, avoiding timing conflicts or data corruption. By coordinating the transitions of the write signal, data_input signal, and clk_logic signal, the system achieves seamless synchronization between clock domains.

This diagram emphasizes the system's robustness in handling configuration updates, maintaining data integrity, and ensuring precise timing in multi-clock environments. It also showcases the system's modularity, allowing it to accommodate dynamic and iterative operations such as counters or state machines.

## Claims

1. A method for changing a configuration of a peripheral in a system comprising a configuration/access interface (C/A-I) operating on a first clock source signal (cs1_signal) provided by a first clock source (CS1) and a data logic module (DL) with a data register module (DR) operating on a second clock source signal (cs2_signal) provided by a second clock source (CS2), the method comprising:
(a) detecting a configuration change;
(b) if an active sampling edge of the second clock source signal (cs2_signal) is detected, waiting for a data register update and then disabling the second clock source (CS2), if not immediately disabling the second clock source (CS2);
(c) writing a new value into the data register (DR), and
(d) if an active sampling edge of the second clock source signal (cs2_signal) is detected, waiting for an edge done, updating the data register and then enabling the second clock source (CS2), immediately disabling the second clock source (CS2); if not, immediately enabling the second clock source (CS2).

2. The method according to claim 1, wherein the configuration change is detected by a configuration change detector module (CCD) associated with the configuration/access interface (C/A-I), wherein the configuration change detector module (CCD) monitors signals from the configuration/access interface (C/A-I) to identify the configuration change.

3. The method according to claim 1, wherein the second clock source (CS2) is disabled by suspending the toggling of the second clock source signal (cs2_signal) for the data logic module (DL) and the data register (DR).

4. The method according to claim 1, wherein the verification of the absence of an active sampling edge of the second clock source signal (cs2_signal) is performed by a configuration manager module (CM).

5. The method according to claim 1, wherein the writing of the new value to the data register (DR) is performed by a data input controller module (DIC) configured to update the value based on the input from the configuration/access interface (C/A-I).

6. The method according to claim 1, if an active sampling edge of the second clock source signal (cs2_signal) is detected, the enabling of the second clock source (CS2) is performed after a predefined delay.

7. The method according to claim 1, wherein the method is performed automatically by the system within a single clock cycle of the first clock source signal (cs1_signal).

8. The method according to claim 1, wherein the data register (DR) is incremented by a predefined value if the data logic module (DL) acts as a counter.

9. A system for changing a configuration of a peripheral, the system comprising:
(a) a configuration/access interface (C/A-I) configured to operate on a first clock source signal (cs1_signal) provided by a first clock source (CS1);
(b) a data logic module (DL) comprising a data register (DR) and configured to operate on second clock source signal (cs2_signal) provided by a second clock source (CS2);
(c) a configuration change detector module (CCD) configured to detect a configuration change initiated by the configuration/access interface (C/A-I);
(d) a configuration manager module (CM) configured to
- if an active sampling edge of the second clock source signal (cs2_signal) is detected, waiting for a data register update and then disabling the second clock source (CS2), if not immediately disabling the second clock source (CS2), and
- if an active sampling edge of the second clock source signal (cs2_signal) is detected, waiting for an edge done, updating the data register and then enabling the second clock source (CS2), immediately disabling the second clock source (CS2); if not, immediately enabling the second clock source (CS2).
(e) a data input controller module (DIC) configured to write a new value to the data register (DR) based on the detected configuration change.

10. A computer program comprising instructions which, when executed by a processor in a system, cause the system to perform a method for changing a configuration of a peripheral, the method comprising:
(a) detecting a configuration change;
(b) if an active sampling edge of the second clock source signal (cs2_signal) is detected, waiting for a data register update and then disabling the second clock source (CS2), if not immediately disabling the second clock source (CS2);
(c) writing a new value to a data register (DR) within a data logic module (DL), and
(d) if an active sampling edge of the second clock source signal (cs2_signal) is detected, waiting for an edge done, updating the data register and then enabling the second clock source (CS2), immediately disabling the second clock source (CS2); if not, immediately enabling the second clock source (CS2).
